# EUROPÄISCHE PATENTANMELDUNG

(11) **EP 4 318 687 A2**
(43) Veröffentlichungstag der Anmeldung: **07.02.2024**
(21) Anmeldenummer: 23184617.1
(22) Anmeldetag: 11.07.2023
(51) Int. Cl.: H01M 8/0273, B32B 37/00, H01M 8/0286, H01M 8/1004, H01M 8/10

(54) **VERFAHREN UND VORRICHTUNG ZUR HERSTELLUNG EINER MEMBRAN-ELEKTRODEN-BAUGRUPPE FÜR EINE BRENNSTOFFZELLE IN EINEM BAHNVERARBEITENDEN PROZESS**

(30) Priorität: 14.07.2022 DE 102022207217
(71) Anmelder: OPTIMA life science GmbH, 74523 Schwäbisch Hall (DE)
(72) Erfinder: Jansen, Johannes, 74545 Michelfeld (DE); Dennert, Martin, 56321 Brey (DE)
(74) Vertreter: Patentanwälte Ruff, Wilhelm, Beier, Dauster & Partner mbB

(57) **Zusammenfassung**

Die Erfindung betrifft ein Verfahren und eine Vorrichtung zur Herstellung einer Membran-Baugruppe in einem bahnverarbeitenden Prozess, umfassend Bereitstellen eines ersten Rahmenmaterials (11) und eines zweiten Rahmenmaterials (12) als Rollenware und Aufbauen der Membran-Baugruppe in einem bahnverarbeitenden Prozess, wobei Membran-Zuschnitte (13) mit dem ersten Rahmenmaterial (11) laminiert werden und das zweite Rahmenmaterial mit dem Verbund umfassend das erste Rahmenmaterial (11) und die Membran-Zuschnitte (13) laminiert wird, und wobei ein Aufbau der Membran-Baugruppe an einer rotierenden Zentralwalze (2) erfolgt.

## Beschreibung

### ANWENDUNGSGEBIET UND STAND DER TECHNIK

Die Erfindung betrifft ein Verfahren und eine Vorrichtung zur Herstellung einer Membran-Baugruppe in einem bahnverarbeitenden Prozess.

Bei der Membran-Baugruppe handelt es sich in einer Ausgestaltung um eine Membran-Elektroden-Anordnung (kurz MEA) oder Teilen davon für eine Brennstoffzelle oder einen Elektrolyseur. Eine MEA umfasst in einer Ausgestaltung eine Katalysator-beschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Für einen weiteren Aufbau können an Außenseiten der MEA zwei Gasdiffusionslagen (kurz GDL) angebracht werden. Ein Anbringen der GDL kann dabei in einem Prozess mit der Herstellung der MEA umfassend die CCM und die Randverstärkungen oder in einem räumlich und/oder zeitlich getrennten Prozess erfolgen. In einer anderen Ausgestaltung wird eine MEA umfassend eine Membran und zwei daran angeordnete Gasdiffusionslagen bereitgestellt, wobei an dieser MEA einseitig oder beidseitig Randverstärkungen oder Rahmen angebracht werden.

Daneben sind Membran-Baugruppen für andere Anwendungen bekannt, beispielsweise für Elektrolyseure, Redox-Flow-Batterien oder Membran-basierte Luftbefeuchter.

Aus DE 10 2020 206 609 A1 sind ein Verfahren und eine Vorrichtung zur Herstellung von Membran-Baugruppen in einem bahnverarbeitenden Prozess bekannt, wobei ein Materialverbund umfassend ein Rahmenmaterial und einen Schutzfilm bereitgestellt wird und der Schutzfilm vor einem Ablegen des Rahmenmaterials auf einem Vakuumförderer von dem Rahmenmaterial delaminiert wird. Auf das Rahmenmaterial werden Zuschnitte einer Elektrodenmembranfolie abgelegt.

### AUFGABE UND LÖSUNG

Es ist eine Aufgabe, ein Verfahren und eine Vorrichtung zur Herstellung von Membran-Baugruppen in einem bahnverarbeitenden Prozess zu schaffen, welche für einen Transport eines Rollenmaterials eine genauere Positionierung bieten, als dies durch bisher bekannte Verfahren und Vorrichtungen möglich ist.

Diese Aufgabe wird gelöst durch die Gegenstände mit den Merkmalen der Ansprüche 1 und 8. Vorteilhafte Ausgestaltungen ergeben sich aus den Unteransprüchen.

Gemäß einem ersten Aspekt wird ein Verfahren zum Herstellen einer Membran-Baugruppe in einem bahnverarbeitenden Prozess, insbesondere einer Membran-Elektroden-Anordnung (MEA), geschaffen, umfassend Bereitstellen eines ersten Rahmenmaterials und eines zweiten Rahmenmaterials als Rollenware und Aufbauen der Membran-Baugruppe in einem bahnverarbeitenden Prozess, wobei Membran-Zuschnitte mit dem ersten Rahmenmaterial laminiert werden und das zweite Rahmenmaterial mit dem Verbund umfassend das erste Rahmenmaterial und die Membran-Zuschnitte laminiert wird, wobei ein Aufbau der Membran-Baugruppe an einer rotierenden Zentralwalze erfolgt, wobei an einer ersten Station das erste Rahmenmaterial an die Zentralwalze überführt wird, in Drehrichtung der Zentralwalze stromabwärts der ersten Station die Membran-Zuschnitte an einer zweiten Station an die Zentralwalze überführt und an der Zentralwalze mit dem ersten Rahmenmaterial laminiert werden und in Drehrichtung der Zentralwalze stromabwärts der zweiten Station das zweite Rahmenmaterial an einer dritten Station an die Zentralwalze überführt und an der Zentralwalze mit dem Verbund der Membran-Zuschnitte und des ersten Rahmenmaterials laminiert wird.

Gemäß einem zweiten Aspekt wird eine Vorrichtung zum Herstellen einer Membran-Baugruppe in einem bahnverarbeitenden Prozess, insbesondere einer Membran-Elektroden-Anordnung (MEA), geschaffen, umfassend eine Zentralwalze, wobei am Umfang der Zentralwalze drei Stationen vorgesehen sind, wobei die erste Station ausgebildet ist, um ein als Rollenmaterial zugeführtes erste Rahmenmaterial an die Zentralwalze zu überführen, wobei die zweite Station in Drehrichtung der Zentralwalze stromabwärts der ersten Station angeordnet ist und ausgebildet ist, um Membran-Zuschnitte an die Zentralwalze zu überführen und an der Zentralwalze mit dem ersten Rahmenmaterial zu laminieren und wobei die dritte Station in Drehrichtung der Zentralwalze stromabwärts der zweiten Station angeordnet ist und die dritte Station ausgebildet ist, um ein als Rollenmaterial zugeführtes zweites Rahmenmaterial an die Zentralwalze zu überführen und an der Zentralwalze mit dem Verbund der Membran-Zuschnitte und des ersten Rahmenmaterials zu laminieren.

Die Begriffe "erster" und "zweiter" dienen im Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen.

Die Begriffe "ein", "einer" etc. werden im Zusammenhang mit der Anmeldung als unbestimmte Artikel und nicht als Zählwörter verwendet.

Die Zentralwalze erlaubt eine genaue Positionierung des als Rollenmaterial bereitgestellten Rahmenmaterials und einem darauf aufgebauten Laminat in einer bahnverarbeitenden Prozessanlage zum Herstellen einer Membran-Baugruppe. Das als Rollenmaterial bereitgestellte Rahmenmaterial sowie ein darauf aufgebautes Laminat und - sofern vorhanden - eine zwischen dem ersten Rahmenmaterial und der Zentralwalze geführte Schutzfolie und/oder Trägerbahn werden nachfolgend auch als umschlingende Bahn bezeichnet.

In einer Ausgestaltung sind Umschlingungswinkel, Radius der Zentralwalze und Bahnspannung der umschlingenden Bahn so gewählt, dass die umschlingende Bahn sicher haftend an der Zentralwalze anliegt, und auf eine zusätzliche fixierende Kraft, beispielsweise mittels eines Vakuums oder Unterdrucks im Inneren der Walze, verzichtet werden kann. Die Zentralwalze ist in einer weiteren Ausgestaltung als Vakuumwalze gestaltet. Ein Verzicht auf ein Vakuum und/oder einen Unterdruck ist insbesondere bei empfindlichen Materialbahnen und/oder Laminaten, welche durch Ansaugöffnungen am Umfang des Zentralzylinders verformt oder beschädigt werden können, vorteilhaft.

Die Zentralwalze wird mittels eines geeigneten Antriebs zur Rotation angetrieben.

Der Radius der Zentralwalze ist derart gewählt, dass es aufgrund einer Krümmung der Materialbahnen entlang des Umfangs der Zentralwalze weder zu einer Beschädigung der Rahmenmaterialien und/oder der Membran-Zuschnitte, noch zu einer Delamination kommt.

Der Begriff "Rahmenmaterial" bezeichnet im Zusammenhang mit der Anmeldung ein Material, welches an einer Außenseite eines Membran-Zuschnitts angebracht wird. Dabei kann es sich in einer Ausgestaltung um ein widerstandsfähiges Material für eine Randverstärkung handeln. Die Erfindung ist jedoch nicht auf diese Materialien beschränkt. Das erste und das zweite Rahmenmaterial sind in einer Ausgestaltung gleich. In anderen Ausgestaltungen sind diese unterschiedlich.

In das erste und/oder das zweite Rahmenmaterial sind in vorteilhaften Gestaltungen Stanzkonturen für Fenster eingebracht, wobei die Membran-Zuschnitte im Bereich der Fenster an dem ersten Rahmenmaterial abgelegt werden und das zweite Rahmenmaterial so auf den Verbund der Membran-Zuschnitte und des ersten Rahmenmaterials laminiert wird, dass die Fenster deckungsgleich zu den Fenstern des ersten Rahmenmaterials sind und die Membran-Zuschnitte einrahmen. Die Stanzkonturen für Fenster sind vor einem Überführen des ersten bzw. zweiten Rahmenmaterials an die Zentralwalze eingebracht, sodass die Zentralwalze lediglich einem Transport und einer Stabilisierung eines bereits zugeschnittenen Rahmenmaterials, nicht jedoch als Gegenzylinder für einen Schneidprozess dient. Eine Verlagerung des Schneidprozesses von der Zentralwalze weg erlaubt eine größere Formatfreiheit beim Herstellen der Membran-Baugruppe.

In einer Ausgestaltung ist vorgesehen, dass das erste Rahmenmaterial und/oder das zweite Rahmenmaterial auf einem Schutzfilm bereitgestellt wird/werden, wobei der Schutzfilm vor einem Überführen des ersten Rahmenmaterial bzw. des zweiten Rahmenmaterial an die Zentralwalze delaminiert wird. Ein Bereitstellen des Rahmenmaterials mit einem Schutzfilm erlaubt es, bereits im Vorfeld an dem Rahmenmaterial eine adhäsive Beschichtung vorzusehen. Die Beschichtung kann dabei besonders gleichmäßig auf dem Rahmenmaterial aufgebracht werden. Die Beschichtung wird nach einem Laminieren mit dem Membran-Zuschnitten aktiviert.

In einer Ausgestaltung ist vorgesehen, dass in das auf einem Schutzfilm bereitgestellte erste Rahmenmaterial und/oder in das auf einem Schutzfilm bereitgestellte zweite Rahmenmaterial vor einer Delamination des Schutzfilms Stanzkonturen für Fenster eingebracht wird/werden.

Der Schutzfilm ermöglicht eine Stabilisierung des Rahmenmaterials bei dessen Bearbeitung, insbesondere bei einem Einbringen von Stanzkonturen für Fenster. Ein Einbringen der Stanzkonturen erfolgt dabei in einer Ausgestaltung unmittelbar vor einer Delamination des Schutzfilms. Die Stanzkonturen werden dabei in Ausgestaltungen in das erste bzw. zweite Rahmenmaterial eingebracht werden, ohne dass der Schutzfilm durchtrennt wird. Dadurch wird eine Schwächung des Schutzfilms verhindert und ein sicherer Transport des Rahmenmaterials ohne Verzug bis zu einer Delamination gewährleistet.

In einer Ausgestaltung ist vorgesehen, dass das erste Rahmenmaterial und/oder das zweite Rahmenmaterial mittels einer am Umfang der Zentralwalze angeordneten, synchron zu der Zentralwalze rotierenden Übergabewalze an die Zentralwalze überführt wird/werden. In einer Ausgestaltung werden dabei die Membranabschnitte direkt mittels einer Spendevorrichtung auf das mittels der Zentralwalze transportierte Rahmenmaterial aufgebracht, ohne dass hierfür eine Übergabewalze vorgesehen ist.

Die erste Station und/oder die zweite Station weisen zu diesem Zweck in einer Ausgestaltung eine am Umfang der Zentralwalze angeordnete, mit der Zentralwalze einen Spalt bildende oder die Zentralwalze kontaktierende Übergabewalze auf. Ein Spaltmaß ist dabei je nach Anwendungsfall durch den Fachmann geeignet wählbar, beispielsweise um eine sichere Lamination an der zweiten Station zu erzielen. In einer Ausgestaltung ist vorgesehen, dass ein Spaltmaß einstellbar ist. Alterativ ist in einer anderen Ausgestaltung vorgesehen, dass eine oder mehrere Übergabewalzen mittels eines Kraftelements in Richtung der Zentralwalze gezwungen sind. Ohne eine zwischen Zentralwalze und der Übergabewalze vorgesehene Bahn kontaktiert in einer Ausgestaltung die Übergabewalze die Zentralwalze.

In einer Ausgestaltung ist vorgesehen, dass das erste Rahmenmaterial und/oder das zweite Rahmenmaterial auf einem Schutzfilm bereitgestellt wird/werden, wobei der Schutzfilm an der Übergabewalze von dem Rahmenmaterial delaminiert wird. Ein Einbringen der Stanzkonturen erfolgt dabei in einer Ausgestaltung unmittelbar vor einer Delamination des Schutzfilms.

Die erste Station und/oder die dritte Station weisen zu diesem Zweck in einer Ausgestaltung jeweils eine am Umfang der Übergabewalze angeordnete Delaminationseinrichtung auf, die ausgebildet ist, um einen Schutzfilm von dem ersten Rahmenmaterial bzw. dem zweiten Rahmenmaterial zu delaminieren. Die Delaminationseinrichtung umfasst in einer Ausgestaltung eine Delaminationsrolle, eine Delaminationskante und/oder eine andere Delaminationskontur. In anderen Ausgestaltungen umfasst die Delaminationseinrichtung Blasdüsen oder ähnlich Hilfsmittel, um den Schutzfilm von dem Rahmenmaterial für eine Delamination zu lösen. In wieder anderen Ausgestaltungen ist die Delaminationseinrichtung ausgebildet, um ohne mechanische Umlenkhilfen und/oder Blasdüsen den Schutzfilm von dem Rahmenmaterial zu delaminieren. Das aufgrund der Stanzkonturen geschwächte Rahmenmaterial wird dabei bis zu einer Übernahme durch die Übergabewalze mittels des Schutzfilms stabilisiert, wobei insbesondere der Schutzfilm nicht durch Stanzkonturen durchtrennt ist.

In wieder anderen Ausgestaltungen ist die Delaminationseinrichtung ausgebildet, um den Schutzfilm ohne mechanische Umlenkhilfen von dem Rahmenmaterial zu delaminieren. In einer Ausgestaltung werden die Membran-Zuschnitte mittels einer am Umfang der Zentralwalze angeordneten, synchron zu der Zentralwalze rotierenden Übergabewalze an die Zentralwalze überführt.

Die zweite Station weist zu diesem Zweck in Ausgestaltungen eine am Umfang der Zentralwalze angeordnete, mit der Zentralwalze einen Spalt bildende oder die Zentralwalze kontaktierende Übergabewalze auf.

In einer Ausgestaltung werden die Membran-Zuschnitte auf einem Schutzfilm bereitgestellt, wobei der Schutzfilm an einer stromaufwärts der Übergabewalze angeordneten Delaminationswalze von den Membran-Zuschnitten delaminiert wird und die Membran-Zuschnitte von der Delaminationswalze auf die Übergabewalze übertragen werden. Die Kombination aus Übergabewalze und Delaminationswalze erlaubt es, einen Abstand zwischen den Membran-Zuschnitten nach einer Delamination zu verändern, insbesondere zu vergrößern, sodass ein aufgrund des Zuschneidens anfallender Materialabfall niedrig gehalten werden kann.

Die zweite Station weist in einer Ausgestaltung eine stromaufwärts der Übergabewalze angeordnete Delaminationswalze und eine am Umfang der Delaminationswalze angeordnete Delaminationseinrichtung auf, wobei die Delaminationseinrichtung ausgebildet ist, um einen Schutzfilm von den Membran-Zuschnitten zu delaminieren. Die Delaminationseinrichtung kann dabei baugleich oder abweichend zu den an der ersten und der dritten Station angeordneten Delaminationseinrichtungen gestaltet sein.

Für eine Weiterverarbeitung der Membran-Baugruppe in nachfolgenden Prozessen und/oder für eine Zwischenlagerung vor einer Weiterverarbeitung kann es vorteilhaft sein, wenn die Membran-Baugruppe auf einer Trägerbahn angeordnet ist.

In Ausgestaltungen des Verfahrens ist daher vorgesehen, dass vor dem ersten Rahmenmaterial eine erste Trägerbahn an die Zentralwalze übertragen wird, wobei die Membran-Baugruppe auf der ersten Trägerbahn aufgebaut wird, und/oder nach dem zweiten Rahmenmaterial eine zweite Trägerbahn an die Zentralwalze übertragen wird, wobei die zweite Trägerbahn auf die Membran-Baugruppe laminiert wird.

Ebenso ist in Ausgestaltungen der Vorrichtung vorgesehen, dass stromaufwärts der ersten Station eine Zuführeinrichtung für eine erste Trägerbahn vorgesehen ist, die ausgebildet ist, um die erste Trägerbahn vor oder mit dem ersten Rahmenmaterial an die Zentralwalze zu übertragen, sodass die Membran-Baugruppe auf der ersten Trägerbahn aufbaubar ist, und/oder stromabwärts der dritten Station am Umfang der Zentralwalze eine vierte Station vorgesehen ist, die ausgebildet ist, um eine zweite Trägerbahn an die Zentralwalze zu übertragen, wobei die zweite Trägerbahn auf die Membran-Baugruppe laminierbar ist.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der schematischen Figuren erläutert sind. Dabei zeigen:
- Fig. 1: eine erste Ausgestaltung einer Vorrichtung zur Herstellung der Membran-Baugruppe in einem bahnverarbeitenden Prozess an einer Zentralwalze, bei der als erstes eine Trägerbahn auf die Zentralwalze geführt wird und ein Aufbau der MembranBaugruppe auf der Trägerbahn erfolgt, und
- Fig. 2: eine zweite Ausgestaltung einer Vorrichtung zur Herstellung der MembranBaugruppe in einem bahnverarbeitenden Prozess an einer Zentralwalze, bei der eine Trägerbahn nach einem Aufbau der Membran-Baugruppe auf der Zentralwalze am Ende dieses Prozesses zugeführt wird.

### DETAILLIERTE BESCHREIBUNG DER AUSFÜHRUNGSBEISPIELE

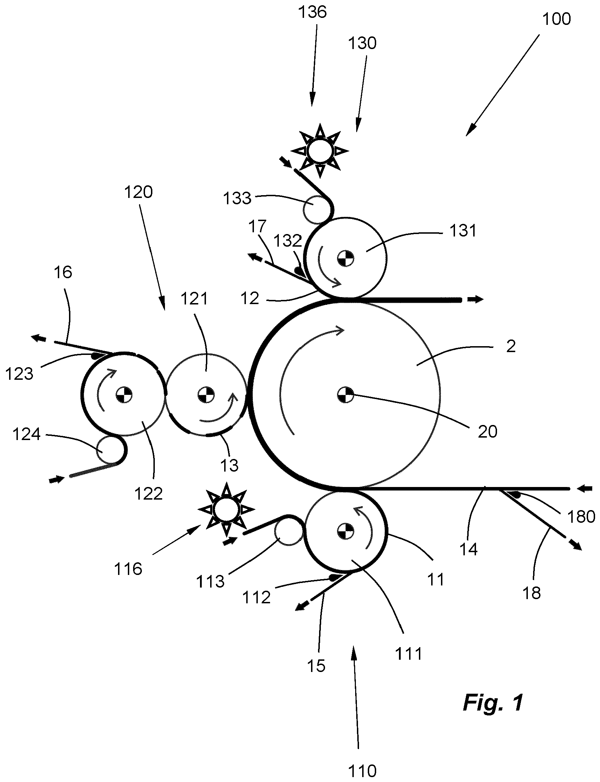

Fig. 1 zeigt schematisch ein erstes Ausführungsbeispiel einer Vorrichtung 100 zur Herstellung einer Membran-Baugruppe in einem bahnverarbeitenden Prozess an einer um eine Achse 20 rotierenden Zentralwalze 2.

Die mittels der Vorrichtung 100 aufgebaute Membran-Baugruppe umfasst ein erstes bahnförmiges Rahmenmaterial 11, ein zweites bahnförmiges Rahmenmaterial 12 und zwischen dem ersten und dem zweiten Rahmenmaterial 11,12 angeordneten Membran-Zuschnitte 13. Die Membran-Baugruppe umfasst weiter eine als Rollenware bereitgestellte Trägerbahn 14.

Die Vorrichtung 100 umfasst eine erste Station 110, eine zweite Station 120 und eine dritte Station 130.

An der ersten Station 110 wird das erste Rahmenmaterial 11 an die Zentralwalze 2 überführt. Das Rahmenmaterial 11 wird als Rollenware und in dem dargestellten Ausführungsbeispiel auf einem Schutzfilm 15 bereitgestellt. Eine Überführung des ersten Rahmenmaterials 11 an die Zentralwalze 2 erfolgt in dem dargestellten Ausführungsbeispiel mittels einer synchron zu der Zentralwalze 2 rotierenden Übergabewalze 111, wobei in dem dargestellten Ausführungsbeispiel der Schutzfilm 15 von dem ersten Rahmenmaterial 11 an der Übergabewalze 111 mittels einer schematisch als Trennkante dargestellten Delaminationseinrichtung 112 abgezogen wird. Für eine sichere Umschlingung der Übergabewalze 111 ist eine Anpressrolle 113 vorgesehen.

Stromaufwärts der Übergabewalze 111 ist an der Station 110 eine Schneideinrichtung 116 vorgesehen, die eingerichtet ist, um Stanzkonturen für Fenster in das erste Rahmenmaterial 11 einzubringen. Die Schneideinrichtung 116 ist dabei in Ausgestaltungen derart gestaltet, dass ein Einbringen der Stanzkonturen ohne Durchtrennen des Schutzfilms 15 erfolgt. Der Schutzfilm 15 sorgt dabei für eine Stabilisierung des ersten Rahmenmaterials 11 bei einem Transport des ersten Rahmenmaterials 11 zu der Übergabewalze 111. Nach der Delamination des Schutzfilms 15 ist eine Stabilisierung des Rahmenmaterials 11 durch die Übergabewalze 111 und später die Zentralwalze 2 sichergestellt.

An der zweiten Station 120 werden die Membran-Zuschnitte 13 an die Zentralwalze 2 überführt und dort auf das bereits vorhandene erste Rahmenmaterial 11 laminiert. Die Membran-Zuschnitte 13 werden auf einem Schutzfilm 16 bereitgestellt. Die dargestellte zweite Station 120 umfasst eine Übergabewalze 121 und eine stromaufwärts der Übergabewalze 121 angeordnete Delaminationswalze 122. Die Übergabewalze 121 rotiert synchron zu der Zentralwalze 2. Die Delaminationswalze 122 und die Übergabewalze 121 sind derart angeordnet und betrieben, dass ein Abstand zwischen aufeinanderfolgenden Membran-Zuschnitten 13 bei einer Überführung an die Übergabewalze 121 vergrößert werden kann. Der Schutzfilm 16 wird in dem dargestellten Ausführungsbeispiel von den Membran-Zuschnitten 13 an der Delaminationswalze 122 mittels einer schematisch als Trennkante dargestellten Delaminationseinrichtung 123 abgezogen. Für eine sicher Umschlingung der Delaminationswalze 122 ist eine Anpressrolle 124 vorgesehen.

An der dritten Station 130 wird das zweite Rahmenmaterial 12 an die Zentralwalze 2 überführt und mit dem von der Zentralwalze 2 transportierten Verbund umfassend das erste Rahmenmaterial 11 und die Membran-Zuschnitte 13 laminiert. Die dritte Station 130 ist baugleich der ersten Station 110 gestaltet. Das zweite Rahmenmaterial 12 wird als Rollenware bereitgestellt. Eine Überführung des zweiten Rahmenmaterials 12 an die Zentralwalze 2 erfolgt in dem dargestellten Ausführungsbeispiel mittels einer synchron zu der Zentralwalze 2 rotierenden Übergabewalze 131. Das zweite Rahmenmaterial 12 wird in dem dargestellten Ausführungsbeispiel auf einem Schutzfilm 17 bereitgestellt, wobei der Schutzfilm 17 von dem zweiten Rahmenmaterial 12 an der Übergabewalze 131 mittels einer schematisch als Trennkante dargestellten Delaminationseinrichtung 132 abgezogen wird. Für eine sicher Umschlingung der Übergabewalze 131 ist eine Anpressrolle 133 vorgesehen.

Stromaufwärts der Übergabewalze 131 ist an der dritten Station 130 eine Schneideinrichtung 136 vorgesehen, die eingerichtet ist, um Stanzkonturen für Fenster in das zweite Rahmenmaterial 12 einzubringen. Die Schneideinrichtung 136 ist dabei in Ausgestaltungen derart gestaltet, dass ein Einbringen der Stanzkonturen ohne Durchtrennen des Schutzfilms 17 erfolgt. Der Schutzfilm 17 sorgt dabei für eine Stabilisierung des zweiten Rahmenmaterials 12 bei einem Transport des zweiten Rahmenmaterials 12 zu der Übergabewalze 131. Nach der Delamination des Schutzfilms 17 ist eine Stabilisierung des zweiten Rahmenmaterials 12 durch die Übergabewalze 131 und später die Zentralwalze 2 sichergestellt.

Für eine Stabilisierung des Laminats umfassend das erste Rahmenmaterial 11, das zweite Rahmenmaterial 12 und die dazwischen angeordneten Membran-Zuschnitte 13 ist in dem dargestellten Ausführungsbeispiel die selbstklebende Trägerbahn 14 vorgesehen. Die Trägerbahn 14 wird vor oder wie dargestellt mit dem ersten Rahmenmaterial 11 an die Zentralwalze 2 überführt.

Die Trägerbahn 14 wird in dem dargestellten Ausführungsbeispiel auf einem Schutzfilm 18 bereitgestellt, wobei der Schutzfilm 18 von der Trägerbahn 14 vor einer Überführung der Trägerbahn 14 an die Zentralwalze 2 mittels einer schematisch als Trennkante dargestellten Delaminationseinrichtung 180 abgezogen wird.

Die Zentralwalze 2 wird mittels eines geeigneten Antriebs zur Rotation angetrieben. In dem dargestellten Ausführungsbeispiel sind zudem auch an den Übergabewalzen 111, 121, 131 und der Delaminationswalze 122 Antriebe vorgesehen. Die Antriebe an den Übergabewalzen 111, 121, 131 und der Delaminationswalze 122 sind in einer Ausgestaltung derart ausgelegt, dass mittels dieser Antriebe lediglich Reibungsverluste ausgeglichen werden. In anderen Ausgestaltungen sind an den Übergabewalzen 111, 121, 131 und der Delaminationswalze 122 zumindest teilweise keine Antriebe vorgesehen.

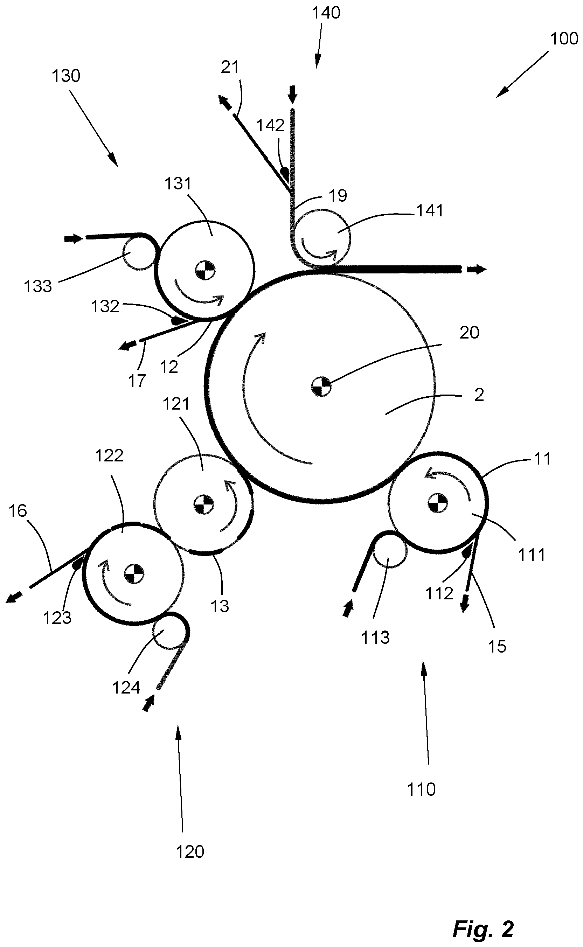

Fig. 2 zeigt schematisch ein zweites Ausführungsbeispiel einer Vorrichtung 100 zur Herstellung einer Membran-Baugruppe an einer um eine Achse 20 rotierenden Zentralwalze 2.

Die Vorrichtung 100 gemäß Fig. 2 ist ähnlich der Vorrichtung 100 gemäß Fig. 1 und für gleiche oder ähnliche Bauteile werden einheitliche Bezugszeichen verwendet. Die Vorrichtung 100 gemäß Fig. 2 umfasst drei Stationen 110, 120, 130, welche zumindest im Wesentlichen funktionsgleich der ersten Station 110, der zweiten Station 120 und der dritten Station 130 gemäß Fig. 1 sind. Für eine Beschreibung der Stationen 110, 120, 130 wird auf oben verwiesen.

Im Unterschied zu der Gestaltung gemäß Fig. 1 ist bei der Gestaltung gemäß Fig. 2 keine erste Trägerbahn 14 vorgesehen, welche mit dem ersten Rahmenmaterial 11 an die Zentralwalze 2 überführt wird.

Stattdessen ist bei der Gestaltung gemäß Fig. 2 eine vierte Station 140 stromabwärts der dritten Station 130 in Drehrichtung der Zentralwalze 2 vorgesehen, wobei eine zweite Trägerbahn 19 an der vierten Station 140 an die Zentralwalze 2 überführt und auf eine Membran-Baugruppe umfassend das erste Rahmenmaterial 11, das zweite Rahmenmaterial 12 und die dazwischen angeordneten Membran-Zuschnitte 13 laminiert wird. Die zweite selbstklebende Trägerbahn 19 wird in dem dargestellten Ausführungsbeispiel mittels einer Rolle 141 an die Zentralwalze 2 überführt.

Die zweite Trägerbahn 19 wird auf einem Schutzfilm 21 bereitgestellt, wobei der Schutzfilm 21 von der Trägerbahn 19 vor einer Überführung der Trägerbahn 19 an die Zentralwalze 2 mittels einer schematisch als Trennkante dargestellten Delaminationseinrichtung 142 abgezogen wird.

Die dargestellten Ausführungsformen sind lediglich beispielhaft und es sind zahlreiche Abwandlungen, z.B. ein Aufbau ohne Trägerbahnen, denkbar, bei welchen eine Membran-Baugruppe an einer rotierenden Zentralwalze 2 aufgebaut wird. Insbesondere ist es denkbar, anstelle der dargestellten Anordnung der ersten Station 110 unterhalb der Zentralwalze 2, die erste Station 110 oberhalb der Zentralwalze anzuordnen und die dritte Station 130 unterhalb der Zentralwalze 2.

## Patentansprüche

1. Verfahren zum Herstellen einer Membran-Baugruppe in einem bahnverarbeitenden Prozess, insbesondere einer Membran-Elektroden-Anordnung (MEA), umfassend:
- Bereitstellen eines ersten Rahmenmaterials (11) und eines zweiten Rahmenmaterials (12) als Rollenware und
- Aufbauen der Membran-Baugruppe in einem bahnverarbeitenden Prozess, wobei Membran-Zuschnitte (13) mit dem ersten Rahmenmaterial (11) laminiert werden und das zweite Rahmenmaterial mit dem Verbund umfassend das erste Rahmenmaterial (11) und die Membran-Zuschnitte (13) laminiert wird,
**dadurch gekennzeichnet, dass**
ein Aufbau der Membran-Baugruppe an einer rotierenden Zentralwalze (2) erfolgt, wobei an einer ersten Station (110) das erste Rahmenmaterial (11) an die Zentralwalze (2) überführt wird, in Drehrichtung der Zentralwalze (2) stromabwärts der ersten Station (110) die Membran-Zuschnitte (13) an einer zweiten Station (120) an die Zentralwalze (2) überführt und an der Zentralwalze (2) mit dem ersten Rahmenmaterial (11) laminiert werden und
in Drehrichtung der Zentralwalze (2) stromabwärts der zweiten Station (120) das zweite Rahmenmaterial (12) an einer dritten Station (130) an die Zentralwalze (2) überführt und an der Zentralwalze (2) mit dem Verbund der Membran-Zuschnitte (13) und des ersten Rahmenmaterials (11) laminiert wird.

2. Verfahren nach Anspruch 1, **dadurch gekennzeichnet, dass** das erste Rahmenmaterial (11) und/oder das zweite Rahmenmaterial (12) auf einem Schutzfilm (15, 17) bereitgestellt wird/werden, wobei der Schutzfilm (15, 17) vor einem Überführen des ersten Rahmenmaterial (11) bzw. des zweiten Rahmenmaterial (12) an die Zentralwalze delaminiert wird.

3. Verfahren nach Anspruch 2, **dadurch gekennzeichnet, dass** in das auf einem Schutzfilm (15) bereitgestellte erste Rahmenmaterial (11) und/oder in das auf einem Schutzfilm (17) bereitgestellte zweite Rahmenmaterial (12) vor einer Delamination des Schutzfilms (15, 17) Stanzkonturen für Fenster eingebracht wird/werden, wobei insbesondere die Stanzkonturen in das erste bzw. zweite Rahmenmaterial (11, 12) eingebracht werden, ohne dass der Schutzfilm (15, 17) durchtrennt wird.

4. Verfahren nach Anspruch 1, 2 oder 3, **dadurch gekennzeichnet, dass** das erste Rahmenmaterial (11) und das zweite Rahmenmaterial (12) jeweils mittels einer am Umfang der Zentralwalze (2) angeordneten, synchron zu der Zentralwalze (2) rotierenden Übergabewalze (111, 131) an die Zentralwalze (2) überführt werden, wobei insbesondere das erste Rahmenmaterial (11) und/oder das zweite Rahmenmaterial (12) auf einem Schutzfilm (15, 17) bereitgestellt wird/werden, wobei der Schutzfilm (15, 17) an der Übergabewalze (111, 131) von dem ersten Rahmenmaterial (11) bzw. dem zweiten Rahmenmaterial (12) delaminiert wird.

5. Verfahren nach einem der Ansprüche 1 bis 4, **dadurch gekennzeichnet, dass** die Membran-Zuschnitte (13) mittels einer am Umfang der Zentralwalze (2) angeordneten, synchron zu der Zentralwalze (2) rotierenden Übergabewalze (121) an die Zentralwalze (2) überführt werden.

6. Verfahren nach Anspruch 5, **dadurch gekennzeichnet, dass** die Membran-Zuschnitte (13) auf einem Schutzfilm (16) bereitgestellt werden, wobei der Schutzfilm (16) an einer stromaufwärts der Übergabewalze (121) angeordneten Delaminationswalze (122) von den Membran-Zuschnitten delaminiert wird und die Membran-Zuschnitte von der Delaminationswalze auf die Übergabewalze übertragen werden.

7. Verfahren nach einem der Ansprüche 1 bis 6, **dadurch gekennzeichnet, dass** vor dem ersten Rahmenmaterial (11) eine erste Trägerbahn (14) an die Zentralwalze (2) übertragen wird, wobei die Membran-Baugruppe auf der ersten Trägerbahn (14) aufgebaut wird, und/oder nach dem zweiten Rahmenmaterial eine zweite Trägerbahn (19) an die Zentralwalze übertragen wird, wobei die zweite Trägerbahn auf die Membran-Baugruppe laminiert wird.

8. Vorrichtung zum Herstellen einer Membran-Baugruppe in einem bahnverarbeitenden Prozess, insbesondere einer Membran-Elektroden-Anordnung (MEA), umfassend eine Zentralwalze (2),
wobei am Umfang der Zentralwalze (2) drei Stationen (110, 120, 130) vorgesehen sind, wobei die erste Station (110) ausgebildet ist, um ein als Rollenmaterial zugeführtes erste Rahmenmaterial (11) an die Zentralwalze (2) zu überführen,
wobei die zweite Station (120) in Drehrichtung der Zentralwalze (2) stromabwärts der ersten Station (110) angeordnet ist und ausgebildet ist, um Membran-Zuschnitte (13) an die Zentralwalze (2) zu überführen und an der Zentralwalze (2) mit dem ersten Rahmenmaterial (11) zu laminieren und
wobei die dritte Station (130) in Drehrichtung der Zentralwalze (2) stromabwärts der zweiten Station (120) angeordnet ist und die dritte Station (130) ausgebildet ist, um ein als Rollenmaterial zugeführtes zweites Rahmenmaterial (12) an die Zentralwalze (2) zu überführen und an der Zentralwalze (2) mit dem Verbund der Membran-Zuschnitte (13) und des ersten Rahmenmaterials (11) zu laminieren.

9. Vorrichtung nach Anspruch 8, **dadurch gekennzeichnet, dass** die erste Station (110) eine erste Delaminationseinrichtung (112) und/oder die dritte Station (130) eine zweite Delaminationseinrichtung (132) aufweist/aufweisen, die ausgebildet ist/sind, um einen Schutzfilm (15, 17) von dem ersten Rahmenmaterial (11) bzw. dem zweiten Rahmenmaterial (12) zu delaminieren.

10. Vorrichtung nach Anspruch 9, **dadurch gekennzeichnet, dass** stromaufwärts der ersten Delaminationseinrichtung (112) und/oder stromaufwärts der zweiten Delaminationseinrichtung (132) eine Schneideinrichtung (116, 136) vorgesehen ist, die eingerichtet ist um Stanzkonturen für Fenster in das erste Rahmenmaterial (11) oder das zweite Rahmenmaterial (12) einzubringen.

11. Vorrichtung nach Anspruch 8 oder 9, **dadurch gekennzeichnet, dass** die erste Station (110) und die dritte Station (130) jeweils eine am Umfang der Zentralwalze (2) angeordnete, mit der Zentralwalze (2) einen Spalt bildende oder die Zentralwalze (2) kontaktierende Übergabewalze (111, 121, 131) aufweisen.

12. Vorrichtung nach Anspruch 11, **dadurch gekennzeichnet, dass** die erste Station (110) und/oder die dritte Station (130) eine am Umfang der Übergabewalze (111, 131) angeordnete Delaminationseinrichtung (112, 132) aufweisen, die ausgebildet ist, um einen Schutzfilm (15, 17) von dem ersten Rahmenmaterial (11) bzw. dem zweiten Rahmenmaterial (12) zu delaminieren.

13. Vorrichtung nach einem der Ansprüche 8 bis 11, **dadurch gekennzeichnet, dass** die zweite Station (120) eine am Umfang der Zentralwalze (2) angeordnete, mit der Zentralwalze (2) einen Spalt bildende oder die Zentralwalze (2) kontaktierende Übergabewalze (121) aufweist.

14. Vorrichtung nach Anspruch 13, **dadurch gekennzeichnet, dass** die zweite Station (120) eine stromaufwärts der Übergabewalze (121) angeordnete Delaminationswalze (122) und eine am Umfang der Delaminationswalze (122) angeordnete Delaminationseinrichtung (123) aufweist, wobei die Delaminationseinrichtung (123) ausgebildet ist, um einen Schutzfilm (16) von den Membran-Zuschnitten (13) zu delaminieren.

15. Vorrichtung nach einem der Ansprüche 8 bis 13, **dadurch gekennzeichnet, dass** stromaufwärts der ersten Station (110) eine Zuführeinrichtung für eine erste Trägerbahn (14) vorgesehen ist, die ausgebildet ist, um die erste Trägerbahn (14) vor oder mit dem ersten Rahmenmaterial (11) an die Zentralwalze (2) zu übertragen, sodass die Membran-Baugruppe auf der ersten Trägerbahn (14) aufbaubar ist,
und/oder stromabwärts der dritten Station (130) am Umfang der Zentralwalze (2) eine vierte Station (140) vorgesehen ist, die ausgebildet ist, um eine zweite Trägerbahn (19) an die Zentralwalze (2) zu übertragen, wobei die zweite Trägerbahn (19) auf die Membran-Baugruppe laminierbar ist.
